Europäisches Patentamt

European Patent Office

Office européen des brevets

(19)

(11) Veröffentlichungsnummer: **0 308 602**
**A2**

# (12) EUROPÄISCHE PATENTANMELDUNG

(21) Anmeldenummer: **88111252.8**

(22) Anmeldetag: **13.07.88**

(51) Int. Cl.⁴: **G02B 6/10 , G02B 6/12**

(30) Priorität: **25.09.87 DE 3732407**

(43) Veröffentlichungstag der Anmeldung:
**29.03.89 Patentblatt 89/13**

(84) Benannte Vertragsstaaten:
**DE FR GB NL**

(71) Anmelder: **Siemens Aktiengesellschaft Berlin
und München
Wittelsbacherplatz 2
D-8000 München 2(DE)**

(72) Erfinder: **Karstensen, Holger, Dr.
Wörthstrasse 35
D-8000 München 80(DE)**
Erfinder: **Klement, Ekkahard, Dr.
Akilindastrasse 31
D-8032 Gräfelfing(DE)**
Erfinder: **Schneider, Hartmut, Dr.
Ignaz-Günther-Strasse 42
D-8000 München 81(DE)**
Erfinder: **Zarschizky, Helmut, Dr.
Maxlrainstrasse 5
D-8000 München 90(DE)**

(54) **Vergrabener doppelbrechender optischer Wellenleiter oder Struktur aus solchen Wellenleitern sowie Verfahren zur Herstellung eines solchen Wellenleiters oder einer solchen Struktur.**

(57) Es soll ein vergrabener doppelbrechender Wellenleiter (LW1, LW2, LW21, LW32) oder eine Struktur aus solchen Wellenleitern für die integrierte Optik angegeben werden, der bzw. die ausreichend stark doppelbrechend herstellbar ist, so daß die Aufteilung beliebig polarisierten Lichts in zueinander orthogonal polarisierte Komponenten ermöglicht ist.

Dazu wird in einer oder mehreren Glasschichten (GS2, GS3) mit einer vorbestimmten Brechzahl ein Streifenwellenleiter (LW1, LW2, LW21, LW32) oder eine Struktur aus Streifenwellenleitern aus einem Material mit einer im Vergleich zur vorbestimmten Brechzahl höheren Brechzahl ausgebildet, und es ist mindestens eine Schicht (GS1, GS2) vorgesehen, die eine mechanische Spannung mit einer Komponente (Sp) senkrecht zu dem oder den Streifenwellenleitern (LW1, LW2, LW21, LW32) auf die eine oder mehreren Glasschichten (GS2, GS3) der vorbestimmten Brechzahl ausübt.

Komponenten der optischen Nachrichtentechnik, insbesondere für den Überlagerungsempfang.

FIG 2

## Vergrabener doppelbrechender optischer Wellenleiter oder Struktur aus solchen Wellenleitern sowie Verfahren zur Herstellung eines solchen Wellenleiters oder einer solchen Struktur

Die Erfindung betrifft gemäß dem Oberbegriff des Patentanspruchs 1 einen vergrabenen doppelbrechenden Wellenleiter oder eine Struktur aus solchen Wellenleitern sowie ein Verfahren zur Herstellung eines solchen Wellenleiters oder einer solchen Struktur.

Für kohärenten optischen Überlagerungsempfang unabhängig von der Polarisation des ankommenden Signals werden passive optische Bauelemente benötigt, die das Signal in orthogonal polarisierte Anteil aufspalten. Solche Bauelemente können mit den Mitteln der integrierten Optik ausgeführt werden, wenn hinreichend stark doppelbrechende, integrierte optische Wellenleiter oder Strukturen aus solchen Wellenleitern hergestellt werden können, mit denen die Aufteilung beliebig polarisierten Lichts in zwei zueinander orthogonal polarisierte Komponenten durchgeführt werden kann.

Aufgabe der Erfindung ist es daher, einen vergrabenen doppelbrechenden optischen Wellenleiter oder eine Struktur aus solchen Wellenleitern anzugeben, der bzw. die ausreichend stark doppelbrechend herstellbar ist, so daß die Aufteilung beliebig polarisierten Lichts in zueinander orthogonal polarisierte Komponenten ermöglicht ist.

Diese Aufgabe wird durch die im kennzeichnenden Teil des Patentanspruchs 1 angegebenen Merkmale gelöst.

Bevorzugte und vorteilhafte Ausgestaltungen des erfindungsgemäßen Wellenleiters oder der erfindungsgemäßen Struktur gehen aus den Unteransprüchen 1 bis 5 hervor.

Ein erfindungsgemäßer Wellenleiter oder eine erfindungsgemäße Struktur kann grundsätzlich nach einem Verfahren gemäß Anspruch 6 hergestellt werden.

Bevorzugte und vorteilhafte Ausgestaltungen dieses Verfahrens gehen aus den Ansprüchen 4 bis 8 hervor.

Mit den erfindungsgemäßen Wellenleitern und dem erfindungsgemäßen Verfahren können die bekannten Strukturen der integrierten Optik hergestellt werden, wie beispielsweise Verzweiger, optische Richtkoppler, Kaskaden aus optischen Richtkopplern, Wellenleiterkreuzungen und Kombinationen aus diesen Elementen usw..

Die Erfindung beruht auf der Tatsache, daß ausreichende Doppelbrechung in Glas durch mechanische Spannungen hervorgerufen werden kann, wie sie beispielsweise entstehen, wenn miteinander verbundene Gläser mit verschiedenen thermischen Ausdehnungskoeffizienten und elastooptischen Koeffizienten, insbesondere Gläser unterschiedlicher Zusammensetzung, gemeinsam von hoher Temperatur abgekühlt werden.

Die Erfindung wird anhand der Figuren in der nachfolgenden Beschreibung beispielhaft näher erläutert. Von den Figuren zeigen:

Figur 1 eine Draufsicht auf eine Wellenleiterstruktur in Form einer Kaskade aus optischen Richtkopplern auf einem Substrat und

Figur 2 einen Schnitt durch die Struktur nach Figur 1 längs der Schnittlinie II - II in Figur 1.

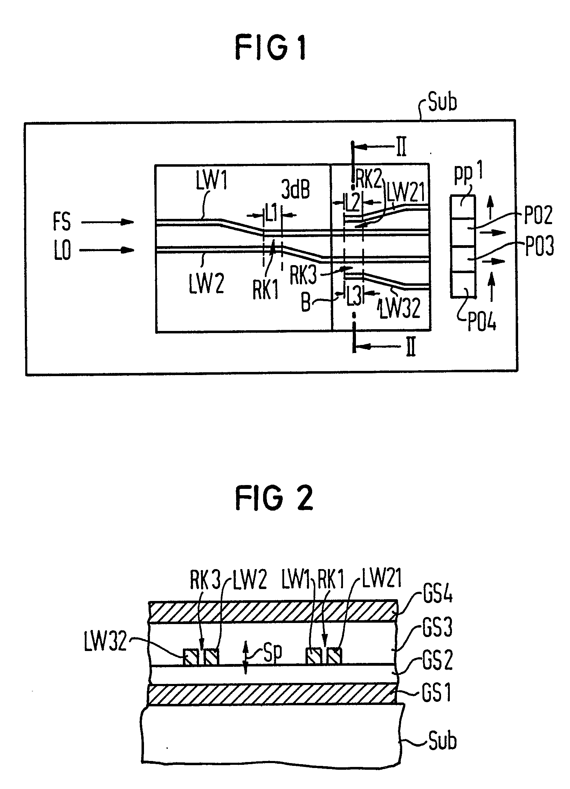

Die Wellenleiterstruktur nach Figur 1 weist eine Kaskade aus optischen Richtkopplern RK1, RK2 und RK3 auf, von denen der Koppler RK1 ein herkömmlicher 3dB-Koppler für beide in jeweils einem der beiden Wellenleiter LW1 und LW2 geführten Eigenmoden ist. Die Koppler RK2 und RK3 sind polarisationsempfindliche Koppler, welche die vollständige Trennung der beiden in dem betreffenden Wellenleiter LW2 bzw. LW3 zugeleiteten, zueinander orthogonalen Eigenmoden ermöglichen. Der eine Eigenmodus wird im Wellenleiter LW1 bzw. LW2 einer Photodiode PD2 bzw. PD3 zugeleitet, während der im Richtkoppler RK2 bzw. RK3 davon getrennte und dazu orthogonale Eigenmode im Wellenleiter LW21 bzw. LW32 einer Photodiode PD1 bzw. PD4 zuleitbar ist.

Die Struktur nach Figur 1 ist für einen optischen Diversity- Empfänger geeignet, wobei in einem der Wellenleiter LW1 oder LW2 das dem Empfänger beispielsweise in einer Übertragungsfaser zugeleitete, elliptisch polarisierte optische Signal FS und in dem anderen Wellenleiter LW2 bzw. LW1 das linear polarisierte optische Signal LO eines Lokaloszillators des Empfängers eingekoppelt wird.

Die optischen Richtkoppler RK1, RK2 und RK3 sind in bekannter Weise dadurch gebildet, daß die beiden Wellenleiter LW1 und LW2, LW1 und LW21 bzw. LW2 und LW32 jeweils in einer Koppelstrecke L1, L2 bzw. L3 so eng benachbart nebeneinander geführt sind, daß eine Überkopplung von Licht zwischen ihnen auftritt, während die Wellenleiter außerhalb der Koppelstrecken L 1, L2 und L3 in einem so großen Abstand nebeneinander geführt sind, daß keine solche Überkopplung auftritt.

Die Richtkoppler RK2 und RK3 unterscheiden sich, wie schon erwähnt, von dem Richtkoppler RK1 dadurch, daß sie polarisationsempfindlich sind und die beiden zugeführten orthogonal zueinander polarisierten Eigenmoden voneinander trennen. Dazu bestehen im Bereich dieser Richtkoppler RK2 und RK3, d.h. zumindest in deren Koppelstrecke L2 bzw. L3 die beiden Wellenleiter LW1 und LW21 bzw. LW2 und LW32 aus stark doppelbrechenden Streifenwellenleitern.

Ein Beispiel für die Erzeugung solcher doppelbrechenden Streifenwellenleiter wird anhand der Figuren 1 und 2 beschrieben: Auf einem Substrat Sub wird im Bereich B der Figur 1, in dem sich die Richtkoppler RK1 und RK2, nicht aber der Richtkoppler RK1 befindet, eine Glasschicht GS1 abgeschieden, die eine vom Mantelglas der Wellenleiter mit einer vorbestimmten Brechzahl verschiedenen thermischen Ausdehnungskoeffizienten und verschiedenen elastooptischen Koeffizienten aufweist. Auf dieser Schicht wird eine Glasschicht GS2 aus dem Mantelglas abgeschieden. Auf dieser Glasschicht GS2 wird eine Glasschicht mit einer im Vergleich zur Brechzahl des Mantelglases höheren Brechzahl abgeschieden, welche möglichst den gleichen thermischen Ausdehnungskoeffizienten und gleichen elastooptischen Koeffizienten haben sollte, wie das Mantelglas.

Diese Glasschicht wird mit Hilfe bekannter Ätz- und Maskierungstechniken abgeätzt, so daß nur die Wellenleiter LW1, LW2, LW21 und LW32 als erhabene Streifen auf der Glasschicht GS2 übrigbleiben. Die Glasschicht GS2 und die darauf befindlichen Wellenleiter LW1, LW2, LW21 und LW32 werden mit einer weiteren abgeschiedenen Glasschicht GS3 aus dem Mantelglas abgedeckt.

Auf die Glasschicht GS3 wird eine Glasschicht GS4 abgeschieden, die wiederum einen vom Mantelglas verschiedenen thermischen Ausdehnungskoeffizienten und verschiedenen elastooptischen Koeffizienten aufweist.

Nach Aufbringen aller Schichten werden diese auf eine höhere Temperatur erwärmt und gemeinsam rasch abgekühlt.

Die Wellenleiter können auch in einer oder mehreren abgeschiedenen Schichten aus Mantelglas durch feldinduzierten Ionenaustausch, durch Diffusion und/oder Ionenimplantation hergestellt werden, die bekannte Techniken sind.

Das Abscheiden der Glasschichten kann aus der Dampfphase, beispielsweise in einem CVD-Verfahren oder auch durch Sputtern erfolgen.

In einem konkreten Ausführungsbeispiel besteht das Substrat aus Silizium, die Schichten GS1 und GS4 aus $SiO_2$, das mit $Al_2O_3$ dotiert ist, die Schichten GS2 und GS3 aus $SiO_2$ und die Wellenleiter LW1, LW21 und LW32 aus $SiO_2$, das mit $GeO_2$ oder $TiO_2$ dotiert ist. Diese Glasschichten werden auf 700°C erhitzt und dann rasch auf Raumtemperatur abgekühlt. Dabei entsteht eine mechanische Spannung mit einer Komponente Sp senkrecht zu den Wellenleitern LW1, LW2, LW21, LW32 und es ergibt sich ein relativer Unterschied $d\beta/\beta$ der Ausbreitungskonstante für die beiden in einem der genannten Wellenleiter geführten, orthogonal zueinander polarisierten Eigenmoden, der einen Wert von etwa $10^{-4}$ hat.

## Ansprüche

1. Vergrabener doppelbrechender optischer Wellenleiter oder Struktur aus solchen Wellenleitern, **dadurch gekennzeichnet,** daß in einer oder mehreren Glasschichten (GS2, GS3) mit einer vorbestimmten Brechzahl ein Streifenwellenleiter (LW1, LW2, LW21, LW32) oder die Struktur aus Streifenwellenleitern aus einem Material mit einer im Vergleich zur vorbestimmten Brechzahl höheren Brechzahl ausgebildet ist, und daß mindestens eine Schicht (GS1, GS2) vorgesehen ist, die eine mechanische Spannung mit einer Komponente (Sp) senkrecht zu dem oder den Streifenwellenleitern (LW1, LW2, LW21, LW32) auf die eine oder mehreren Glasschichten (GS2, GS3) der vorbestimmten Brechzahl ausübt.

2. Wellenleiter oder Struktur nach Anspruch 1, **dadurch gekennzeichnet,** daß die eine oder mehreren Glasschichten (GS2, GS3) zwischen zwei Schichten (GS1, GS4) angeordnet sind, die jeweils eine mechanische Spannung mit einer Komponente (Sp) senkrecht dem oder den Streifenwellenleitern auf die Glasschicht oder -schichten (GS2, GS3) ausüben.

3. Wellenleiter oder Struktur nach einem der vorhergehenden Ansprüche, **dadurch gekennzeichnet,** daß eine Schicht (GS1, GS4), die auf die eine oder mehrere Glasschichten (GS2, GS3) der vorbestimmten Brechzahl eine mechanische Spannung mit einer Komponente (Sp) senkrecht zu dem oder den Streifenwellenleitern (LW1, LW2, LW21, LW32) ausübt, aus einer an die eine oder mehreren Glasschichten (GS2, GS3) der vorbestimmten Brechzahl angrenzenden weiteren Glasschicht mit im Vergleich zu der einen oder den mehreren Glasschichten verschiedenen thermischem Ausdehnungskoeffizienten und verschiedenem elastooptischem Koeffizienten besteht.

4. Verfahren zur Herstellung eines doppelbrechenden optischen Wellenleiters oder einer Struktur aus solchen Wellenleitern nach Anspruch 4, **dadurch gekennzeichnet,** daß auf einem Substrat (Sub) die eine oder mehreren Glasschichten (GS2, GS3) mit der vorbestimmten Brechzahl und zumindest eine weitere Glasschicht (GS1, GS4) mit dem im Vergleich zu der einen oder den mehreren Glasschichten (GS2, GS3) mit der vorbestimmten Brechzahl verschiedenen thermischen Ausdehnungskoeffizienten und elastooptischen Koeffizienten aufeinander aufgebracht werden, wobei nach dem Aufbringen der einen oder mehreren Glasschichten mit der vorbestimmten Brechzahl ein Streifenwellenleiter (LW1, LW2, LW21, LW32) oder die Struktur aus Streifenwellenleitern hergestellt wird, und daß die aufgebrachten Glasschichten (GS1, GS2, GS3, GS4) einer raschen Abkühlung von einer relativ hohen Temperatur auf eine relativ niedrigere Temperatur unterworfen werden.

5. Verfahren nach Anspruch 6, **dadurch gekennzeichnet,** daß der Streifenwellenleiter (LW1, LW2, LW21, LW32) oder die Struktur aus den Streifenwellenleitern in der einen oder den mehreren Glasschichten (GS2, GS3) mit der vorbestimmten Brechzahl durch feldinduzierten Ionenaustausch, durch Diffusion und/oder Ionenimplantation hergestellt wird.

6. Verfahren nach Anspruch 4 oder 5, **dadurch gekennzeichnet,** daß auf eine aufgebrachte Glasschicht (GS2) mit der vorbestimmten Brechzahl eine Glasschicht mit einer relativ dazu höheren Brechzahl aufgebracht wird, daß aus dieser Glasschicht mit der relativ höheren Brechzahl der Streifenwellenleiter (LW1, LW2, LW21, LW32) oder eine Struktur aus Streifenwellenleitern durch Abtrag dieser Glasschicht außerhalb der Wellenleiter (LW1, LW2, LW21, LW32) hergestellt wird, und daß danach der Streifenwellenleiter (LW1, LW2, LW21, LW32) oder die Struktur mit einer Glasschicht (GS3) mit der gleichen Brechzahl sowie dem gleichen thermischen Ausdehnungskoeffizienten und gleichen elastooptischen Koeffizienten abgedeckt wird, wie sie die Glasschicht (GS1) mit der vorbestimmten Brechzahl hat.

7. Verfahren nach einem der vorhergehenden Ansprüche, **dadurch gekennzeichnet,** daß eine Glasschicht (GS1, GS2, GS3, GS4) aus der Dampfphase oder durch Sputtern abgeschieden wird.

8. Verfahren nach Anspruch 7, **dadurch gekennzeichnet,** daß eine Glasschicht (GS1, GS2, GS3, GS4) nach einem CVD-Verfahren abgeschieden wird.

# FIG 1

# FIG 2